(19) **Europäisches Patentamt / European Patent Office / Office européen des brevets**

(11) **EP 2 476 013 B1**

(12) **EUROPÄISCHE PATENTSCHRIFT**

(45) Veröffentlichungstag und Bekanntmachung des Hinweises auf die Patenterteilung:
**20.02.2019 Patentblatt 2019/08**

(21) Anmeldenummer: **10732383.4**

(22) Anmeldetag: **15.07.2010**

(51) Int Cl.:
*G01S 7/481* (2006.01)　　*G01S 7/497* (2006.01)
*G01S 17/10* (2006.01)　　*H01L 31/107* (2006.01)
*G01J 1/44* (2006.01)　　*G01S 7/489* (2006.01)

(86) Internationale Anmeldenummer:
**PCT/EP2010/060232**

(87) Internationale Veröffentlichungsnummer:
**WO 2011/029646 (17.03.2011 Gazette 2011/11)**

(54) **PHOTONENDETEKTOR MIT PARALYSIERBAREM PHOTONEN-EMPFINDLICHEM ELEMENT, INSBESONDERE SPAD, SOWIE ENTFERNUNGSMESSGERÄT MIT SOLCHEM PHOTONENDETEKTOR**

PHOTON DETECTOR WITH AN IMMOBILISABLE PHOTON-SENSITIVE ELEMENT, IN PARTICULAR SPAD, AND DISTANCING MEASURING DEVICE COMPRISING SAID TYPE OF PHOTON DETECTOR

DÉTECTEUR DE PHOTONS COMPORTANT UN ÉLÉMENT IMMOBILISABLE SENSIBLE AUX PHOTONS, NOTAMMENT UNE PHOTODIODE À AVALANCHE SPAD, ET TÉLÉMÈTRE DOTÉ D'UN DÉTECTEUR DE PHOTONS DE CE TYPE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **11.09.2009 DE 102009029376**

(43) Veröffentlichungstag der Anmeldung:
**18.07.2012 Patentblatt 2012/29**

(73) Patentinhaber: **Robert Bosch GmbH**
**70442 Stuttgart (DE)**

(72) Erfinder:
• **EISELE, Andreas**
**70771 Leinfelden-Echterdingen (DE)**
• **WOLST, Oliver**
**72622 Nuertingen (DE)**
• **SCHMIDTKE, Bernd**
**71229 Leonberg (DE)**

(56) Entgegenhaltungen:
**EP-A1- 1 327 905　　WO-A2-2005/084397**
**WO-A2-2006/083349　　US-A- 4 973 125**
**US-A1- 2007 086 076**

EP 2 476 013 B1

## Beschreibung

GEBIET DER ERFINDUNG

Die Erfindung betrifft ein Entfernungsmessgerät mit einem Photonendetektor mit wenigstens einem paralysierbaren Photonen-empfindlichen Element, wobei das Photonen-empfindliche Element mit einer SPAD (Single Photon Avalanche Diode; Einzelphotonenlawinendiode) ausgebildet ist.

Aus der WO 2005/084397 A2 ist eine Transmitter/Receiver Einheit zur elektrooptischen Datenübertragung bekannt. Bei der Vorrichtung der WO 2005/084397 A2 werden elektrische Daten über eine Sendeeinheit im Transmitter, wie beispielsweise einem Laser in optische Signale verwandelt und in eine nachgeschaltete Faser zum Datentransport eingekoppelt. Nach dem Auskoppeln der optischen Signale aus der Faser werden diese über einen elektrooptischen Empfänger wiederum in elektrische Signale umgewandelt. In der Vorrichtung der WO 2005/084397 A2 wird beispielsweise ein APD (Avalanche Photo Diode) auf der Empfänger Seite zur Umwandlung der optischen Signale in elektrische Signale verwendet. Um die auf den Empfänger auftreffende Leistung zu begrenzen, und diesen insbesondere vor einer Zerstörung zu schützen, schlägt die WO 2005/084397 A2 die Anordnung eines optischen Abschwächers (Absoptionselement) vor dem Empfänger vor.

Aus der WO 2006/083349 A2 ist ein optisches LIDAR-System bekannt, welches beispielsweise zur Detektion von biologischen Kampfstoffen eingesetzt werden kann. Das System der ermöglicht die Abstandserkennung und chemische Identifizierung von Zielobjekten.

Aus der US 2007/0086076 A1 ist eine Lichtregelungsvorrichtung mit einem Bauteil zum Aufteilen eines über eine Faseroptik zugeführten Eingangslichtes bekannt. Ferner ist ein photoelektrisches Konversions-Bauteil zur Umwandlung eines Teils des Lichtes in ein elektrisches Signal vorgesehen, welches einem dritten Bauteil zur Regelung eines Öffnens und eines Schließens eines optischen Transmissionspfades zugeführt wird. Dadurch kann die Lichtleistung eines Ausgangslichtes geregelt werden.

Die US 4,973,125 A beschreibt eine optische Begrenzungsvorrichtung zur Verwendung in einer Faseroptik. Dazu wird Licht an einer Kante einer dünnen Siliziumschicht eingekoppelt. Die dünne Siliziumschicht ist auf einem dotierten Silizium-Substrat angeordnet, wodurch ein Brechungsindex der Siliziumschicht verringert wird.

HINTERGRUND DER ERFINDUNG

Es sind Entfernungsmessgeräte bekannt, die einen zeitlich modulierten Lichtstrahl in Richtung auf ein Zielobjekt hin, dessen Abstand zu dem Messgerät ermittelt werden soll, ausrichten und das von dem angepeilten Zielobjekt reflektierte oder rückgestreute Licht zumindest teilweise detektieren und zur Ermittlung der zu messenden Entfernung verwenden. Ein typischer Messbereich liegt dabei in einem Bereich von Entfernungen von wenigen Zentimetern bis zu mehreren hundert Metern.

Um die Entfernung zu dem Zielobjekt messen zu können, kann eine Laufzeit von Photonen, die von dem Messgerät hin zu dem Zielobjekt ausgesendet werden und nach dem Zurücklaufen in dem Messgerät detektiert werden, ermittelt und daraus die gewünschte Entfernung bestimmt werden. Beispielsweise können kurze Lichtpulse ausgesendet werden und eine Laufzeit eines Lichtpulses von der Aussendung bis zur Detektion gemessen werden. Alternativ kann ein Lichtstrahl in seiner Intensität zeitlich moduliert werden, beispielsweise mit einer periodischen Modulation der Lichtintensität, und eine Phasenverschiebung zwischen dem ausgesendeten und dem detektierten Lichtsignal kann verwendet werden, um die Laufzeit und damit die Entfernung zu dem Zielobjekt zu bestimmen. Das Prinzip der Laserentfernungsmessung ist allgemein unter der Bezeichnung "Time of flight ranging", beispielsweise mit kontinuierlicher Modulation der Intensität des Laserstrahls, bekannt.

Um das von dem Zielobjekt zurücklaufende Licht und insbesondere dessen zeitliche Modulation gut detektieren und falls nötig von Hintergrundlicht unterscheiden zu können, kann es vorteilhaft sein, Lichtdetektoren, welche hierin auch als Photonendetektoren bezeichnet werden, mit speziellen Eigenschaften zu verwenden. Beispielsweise wurden Entfernungsmessgeräte entwickelt, bei denen das zurücklaufende Licht mit Hilfe von SPADs detektiert wird. SPADs können eine sehr gute Detektionsempfindlichkeit bis hin zur Detektion einzelner Photonen ermöglichen. Im Gegensatz zu vielen anderen Lichtdetektoren, deren Ausgangssignal analog ist und die Stärke des Ausgangssignals von der eingestrahlten Lichtintensität abhängt, können SPADs ein digitales Signal mit Pulsen weitgehend gleicher Stärke bereitstellen, wobei jeder Puls die Detektion eines Photons angibt und somit das von der SPAD gelieferte digitale Signal eine Photonenzählrate wiedergibt. Ein möglicher Vorteil der Verwendung von SPADs als Lichtdetektoren kann darin liegen, dass SPADs mit der CMOS-Technologie kompatibel hergestellt werden können und somit kostengünstig beispielsweise in eine integrierte Schaltung für die Auswertung der Messsignale integriert werden können.

Allerdings wurde beobachtet, dass Entfernungsmessgeräte, die SPADs zur Detektion von rücklaufendem Licht verwenden, insbesondere in sehr lichtintensiven Messbedingungen nicht ausreichend zuverlässige Messergebnisse liefern können.

OFFENBARUNG UND MÖGLICHE AUSFÜHRUNGSFORMEN DER ERFINDUNG

Es kann ein Bedarf an einem Entfernungsmessgerät bzw. an einem für ein solches Messgerät geeigneten Photonendetektor bestehen, die eine zuverlässige Entfernungsbestimmung bzw. Photonendetektion bei unterschiedlichen Lichtverhältnissen zulassen.

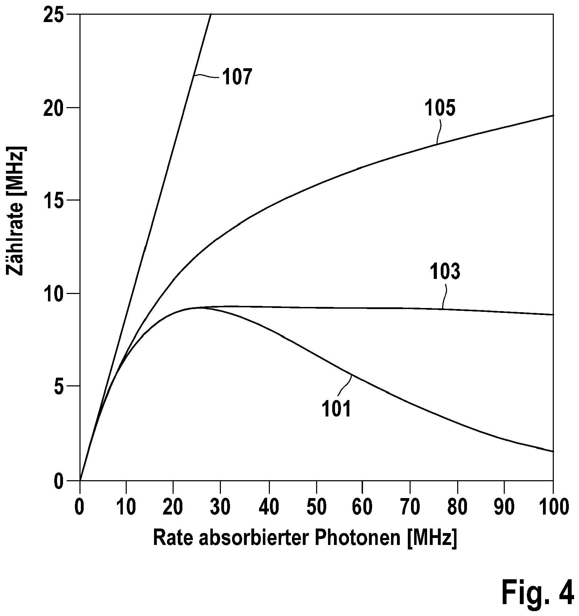

Es wurde beobachtet, dass bestimmte Photonen-empfindliche Elemente wie zum Beispiel SPADs nach dem Auftreffen eines Photons für eine gewisse Totzeit, die im Bereich von beispielsweise 1 bis 100 ns liegen kann, nicht erneut aktivierbar sind. In diesem Zusammenhang wird auch von einem paralysierbaren Ansprechverhalten gesprochen. Wie beispielsweise in Fig. 4 schematisch dargestellt (siehe Kurve 101), kann die von einer einzelnen SPAD ermittelte Zählrate bei einer geringen Rate absorbierter Photonen in etwa proportional zu der Photonenabsorptionsrate sein. Allerdings kann die Zählrate bei einer Photonenabsorptionsrate von etwas weniger als der inversen Totzeit $1/\tau$ der SPAD beginnen, zu sättigen. Bei noch höheren Photonenabsorptionsraten kann die Zählrate sogar abnehmen, da bei derart hohen Photonenabsorptionsraten die SPAD bereits schon wieder ausgelöst wird, bevor sie sich von einem vorhergehenden Detektionsereignis vollständig erholt hat, so dass einzelne Detektionsereignisse nicht mehr unbedingt durch einzelne Detektionssignale signalisiert werden, sondern die SPAD ein verlängertes Ausgangssignal liefern kann, was einer verlängerten Totzeit der SPAD entsprechen kann. Die Effizienz eines paralysierbaren Detektors wie zum Beispiel einer SPAD kann somit bei hohen Photonenströmen stark abnehmen, insbesondere sobald die von der SPAD absorbierte Photonenrate groß gegenüber der inversen Totzeit der SPAD wird.

Eine Idee der vorliegenden Erfindung beruht darauf, aufgrund der beschriebenen Vorteile ein paralysierbares Photonen-empfindliches Element wie zum Beispiel eine SPAD für einen Photonendetektor zu verwenden und den Photonendetektor zusätzlich mit einem Photonentransmissionselement auszustatten, das dazu ausgelegt ist, eine durch das Photonentransmissionselement transmittierte und auf das Photonen-empfindliche Element auftreffende Photonenintensität zu variieren .

Unter der Photonenintensität kann dabei die Rate von Photonen, die pro Zeiteinheit auf die Detektionsfläche des Photonen-empfindlichen Elementes auftreffen, angegeben in $s^{-1}m^{-2}$, verstanden werden. Alternativ kann die Photonenintensität auch in direktem Zusammenhang mit der eingestrahlten Lichtleistung pro Fläche, angegeben in Watt $m^{-2}$, verstanden werden.

Um die durch das Photonentransmissionselement transmittierte Photonenintensität zu variieren, kann das Photonentransmissionselement dazu ausgelegt sein, seine Photonenabsorptionseigenschaften zu variieren. Beispielsweise kann es günstig sein, im Strahlengang vor dem Photonen-empfindlichen Element ein Photonentransmissionselement anzuordnen, dessen Absorptionseigenschaften sich aktiv oder passiv verändern lassen, so dass Licht, das auf den Photonendetektor trifft, zunächst durch das Photonentransmissionselement hindurchtreten muss und dort teilweise absorbiert wird, bevor es auf das Photonen-empfindliche Element mit einer gegebenenfalls reduzierten Photonenintensität auftrifft. Die Absorptionseigenschaften können sich dabei über die gesamte Fläche des Photonentransmissionselementes hin ändern, vorzugsweise homogen.

Alternativ kann das Photonentransmissionselement auch als Aperturblende oder Iris ausgeführt sein. Durch entsprechendes Öffnen oder Schließen der Iris kann eine transmittierte Photonenintensität variiert werden. Anders ausgedrückt ändern sich die Absorptionseigenschaften des als Iris ausgebildeten Photonentransmissionselementes mit der aktuellen Einstellung der Iris.

Das Photonentransmissionselement kann auch dazu ausgelegt sein, die transmittierte Photonenintensität durch Defokussieren zu reduzieren. Mit anderen Worten kann ein Photonentransmissionselement derart ausgestaltet sein, dass transmittiertes Licht gezielt defokussiert wird, das heißt zum Beispiel der Querschnitt eines transmittierten Lichtstrahls gezielt aufgeweitet wird, um auf diese Weise die Photonenintensität, das heißt die pro Fläche auftretende Zahl von Photonen, zu reduzieren. Gegebenenfalls kann das Licht sogar so stark defokussiert werden, dass nicht mehr alle in den Photonendetektor eintretenden Photonen tatsächlich auf das Photonen-empfindliche Element treffen.

Es kann vorteilhaft sein, den Photonendetektor derart auszugestalten, dass die durch das Photonentransmissionselement transmittierte und auf das Photonen-empfindliche Element auftreffende Photonenintensität in Abhängigkeit von der auf das Photonentransmissionselement auftreffenden Photonenintensität variiert wird. Mit anderen Worten können beispielsweise die Absorptionseigenschaften bzw. die defokussierenden Eigenschaften des Photonentransmissionselementes abhängig von der eingestrahlten Photonenintensität variiert werden. Beispielsweise kann das Photonentransmissionselement bei hoher eingestrahlter Photonenintensität stärker absorbieren bzw. stärker defokussieren als bei niedriger Photonenintensität. Auf diese Weise kann die auf das paralysierbare Photonen-empfindliche Element auftreffende Photonenintensität an die Eigenschaften dieses Photonen-empfindlichen Elementes angepasst werden, indem die von außen auf den Photonendetektor auftreffende Photonenintensität zuvor von dem Photonentransmissionselement geeignet reduziert wird.

Insbesondere kann es vorteilhaft sein, durch Variieren der durch das Photonentransmissionselement transmittierten und auf das Photonen-empfindliche Element auftreffenden Photonenintensität zu einer Maximierung einer Photonenzählrate des paralysierbaren Photonen-empfindlichen Elementes beizutragen. Beispielsweise kann es günstig sein, bei sehr hohen Photonenintensitäten, wie sie zum Beispiel aufgrund von sehr starkem Hintergrundlicht bei der Messung auftreten können, eine auf das Photonen-empfindliche Element auftreffende Photonenintensität mit Hilfe des Photonentransmissionselementes derart zu reduzieren, dass das Photonen-empfindliche Element einerseits mit genügend Licht bestrahlt wird, um ein Signal-Rausch-Verhältnis groß zu halten, andererseits aber nicht zu viel Licht auftrifft, da sonst die Zählrate des Photonen-empfindlichen Elementes aufgrund seines paralysierbaren Verhaltens wieder sinken könnte und damit die Gesamteffizienz des Photonendetektors reduziert werden könnte.

Das Photonentransmissionselement kann dazu ausgelegt sein, die transmittierte Photonenintensität passiv in Abhängigkeit von einer auf das Photonentransmissionselement auftreffenden Photonenintensität zu variieren. "Passiv" kann hierbei bedeuten, dass auf eine aktive Regelung und/oder auf eine Energieversorgung des transmittierenden Photonentransmissionselementes verzichtet werden kann und dieses stattdessen seine optischen Eigenschaften selbsttätig ändern kann. Beispielsweise kann das Photonentransmissionselement mit einem photochromen Material ausgebildet sein, welches sich unter Lichteinfall selbst tönt, so dass eine Absorption umso höher ist, je höher die auftreffende Photonenintensität ist. Alternativ oder ergänzend hierzu kann der Photonendetektor zusätzlich eine Photonenintensitätsmesseinrichtung und eine Steuereinrichtung aufweisen, und dazu ausgelegt sein, die durch das Photonentransmissionselement transmittierte Photonenintensität mit Hilfe der Steuereinrichtung aktiv in Abhängigkeit von einer von der Photonenintensitätsmesseinrichtung gemessenen Photonenintensität zu variieren. Die Photonenintensitätsmesseinrichtung kann dabei beispielsweise als separater Lichtsensor ausgebildet sein, der eine auftreffende Lichtintensität misst und ein entsprechendes Messsignal an die Steuereinrichtung weiterleitet, die daraufhin das Photonentransmissionselement entsprechend ansteuert.

Alternativ kann das Photonen-empfindliche Element des Photonendetektors selbst auch als Photonenintensitätsmesseinrichtung dienen, um ein die eingestrahlte Photonenintensität angebendes Messsignal an die Steuereinrichtung zu leiten, so dass diese das Photonentransmissionselement entsprechend ansteuern kann und sich der Photonensensor somit sich hinsichtlich der auf das Photonen-empfindliche Element auftreffenden Photonenintensität selbst regeln kann. Beispielsweise kann eine erste Messung durchgeführt und die Zählrate ermittelt werden. Die Absorption des Photonentransmissionselements kann daraufhin verändert und eine zweite Messung durchgeführt werden. Die Zählrate der zweiten Messung kann dann mit der ersten verglichen, die höhere ausgewählt und so iterativ die optimale bzw. ausreichend gute Einstellung des Photonentransmissionselements ermittelt werden.

Beispielsweise kann eine aktive Einflussnahme auf die optischen Eigenschaften des Photonentransmissionselementes dadurch realisiert werden, dass das Photonentransmissionselement mit Flüssigkristallen ausgebildet ist. Das Photonentransmissionselement kann in diesem Fall als variables Flüssigkristall-Dämpfungselement ("variable liquid crystal attenuator") bezeichnet werden. Alternativ können unterschiedliche Filter mit inhomongenen Transmissions- bzw. Absorptionseigenschaften entsprechend in einen Lichtweg innerhalb des Photonendetektors eingeschoben bzw. eingeschwenkt werden. Beispielsweise kann ein Keil aus absorbierendem Material unterschiedlich weit in den Strahlengang innerhalb des Photonendetektors eingeschoben werden, so dass sich die von den eingestrahlten Photonen zurückgelegte optische Weglänge innerhalb des absorbierenden Keils variieren lässt und damit die transmittierte Photonenintensität entsprechend eingestellt werden kann. Alternativ kann ein optisches Element in Form übereinander gestapelter dielektrischer Schichten, ähnlich wie bei einem dielektrischen Spiegel, in den Strahlengang eingebracht werden und durch Änderung des Winkels des optischen Elements zu dem Strahlenverlauf die Reflexion bzw. Transmission durch das optische Element entsprechend beeinflusst werden. Als weitere Alternative können auch gegeneinander verdrehbare Polarisationsfilter als einstellbares Photonentransmissionselement verwendet werden.

Die zuvor genannten Möglichkeiten einer aktiven oder passiven Einflussnahme auf die optischen Eigenschaften des Photonentransmissionselementes können einzeln oder auch in Kombination miteinander realisiert werden.

Das Photonentransmissionselement kann als zusätzlichen Bauteil zu dem paralysierbaren Photonen-empfindlichen Element in dem Photonendetektor ausgebildet sein und ein oder mehrere Komponenten umfassen. Alternativ kann das Photonentransmissionselement zusammen mit einer oder mehreren ohnehin in dem Photonendetektor vorhandenen optischen Komponente(n) ausgebildet sein. Beispielsweise kann eine im optischen Strahlengang des Photonendetektors befindliche optische Komponente mit einer in ihrer Transmission variierbaren Schicht, beispielsweise aus einem selbsttönenden Material, ausgebildet sein. Auf diese Weise kann zum Beispiel auf eine zusätzliche mechanische Aufnahme für einen Filter verzichtet werden und somit die Komplexität, Baugröße und Kosten reduziert werden. Auch ein Filter im Detektor-Chip-Package ist denkbar.

Zusammenfassend kann ein Gesichtspunkt der Erfindung darin gesehen werden, ein optisches Dämpfungselement oder Defokussierungselement vor einem paralysierbaren Photonen-empfindlichen Element anzuordnen, wobei das Dämpfungs-/Defokussierungselement die auf das Photonen-empfindliche Element einfallende Photonenzahl in Abhängigkeit der Photonenintensität reduzieren kann. Die Kombination von paralysierbarem Photonen-empfindlichem Element und in seiner Transmission variierbarem Photonentransmissionselement kann im Bereich hoher optischer Intensitäten die Anzahl der detektierten Photonen stark erhöhen, indem die einfallende Lichtintensität stark abgeschwächt wird und somit in einen optimalen Arbeitsbereich des paralysierbaren Detektors verschoben werden kann. Gleichzeitig kann die Anordnung im Bereich niedriger optischer Intensitäten die Signalverluste gering halten, indem bei geringer Lichtintensität nur eine geringe optische Abschwächung des auftreffenden Lichtes bewirkt wird.

Bei Messung optischer Signale steigt im Allgemeinen das Signal-Rausch-Verhältnis mit zunehmender Anzahl auftreffender Photonen, die auf einem Detektor detektiert werden, das heißt zum Detektionssignal beitragen. Im Falle von paralysierbaren Detektoren gibt es einen Bereich, in dem zunehmende optische Intensität dazu führen kann, dass die Anzahl der detektierten Photonen sinkt, wie dies in der in Fig. 4 dargestellten Figur auf der rechten Seite zu erkennen ist. In diesem Bereich kann das Signal-Rausch-Verhältnis erhöht werden, indem die auf den paralysierbaren Detektor auftreffende Photonenintensität gezielt abgeschwächt wird.

Wird der beschriebene Photonendetektor beispielsweise in einem Entfernungsmessgerät, manchmal auch als Laserentfernungsmessgerät bezeichnet, zur optischen Messung einer Entfernung zu einem Zielobjekt eingesetzt, so ist die Funktion des Entfernungsmessgerätes meist stark vom Signal-Rausch-Verhältnis abhängig. Aufgrund der beschriebenen Eigenschaften des Photonendetektors kann somit der Arbeitsbereich des Entfernungsmessgerätes zu höheren optischen Intensitäten hin ausgedehnt und damit ein Signal-Rauch-Verhältnis (SNR) erhöht werden. Dies kann insbesondere zu einer Vergrößerung eines Dynamikbereiches beispielsweise für Messungen bei hellem Sonnenlicht oder in dunklen Räumen beitragen. Andererseits kann eventuell bei gleichbleibender Messzeit eine Erhöhung der statistischen Genauigkeit eines Messwertes erreicht werden oder bei gleichbleibender statistischer Genauigkeit eine Verkürzung der notwendigen Messzeit erreicht werden.

Mögliche Aspekte, Vorteile und Ausgestaltungen der Erfindung wurden vorangehend mit Bezug auf einzelne Ausführungsformen der Erfindung beschrieben. Die Beschreibung, die zugehörigen Figuren sowie die Ansprüche enthalten zahlreiche Merkmale in Kombination. Ein Fachmann wird diese Merkmale, insbesondere auch die Merkmale verschiedener Ausführungsbeispiele, auch einzeln betrachten und zu sinnvollen weiteren Kombinationen zusammenfassen.

KURZE BESCHREIBUNG DER FIGUREN

Nachfolgend werden Ausführungsformen der Erfindung und darin enthaltene Teilaspekte mit Bezug auf die beigefügten Figuren beschrieben. Die Figuren sind lediglich schematisch und nicht maßstabsgetreu. Gleiche oder ähnliche Bezugszeichen in den Figuren bezeichnen gleiche oder ähnliche Elemente.

Fig. 1 zeigt einen Photonendetektor mit einem passiv arbeitenden Photonentransmissionselement gemäß einer Ausführungsform der vorliegenden Erfindung.

Fig. 2 zeigt einen Photonendetektor mit einem aktiv gesteuerten Photonentransmissionselement gemäß einer Ausführungsform der vorliegenden Erfindung.

Fig. 3 zeigt einen Photonendetektor mit gesteuerter aktiver Defokussierung gemäß einer Ausführungsform der vorliegenden Erfindung.

Fig. 4 zeigt einen Graphen einer Zählrate in Abhängigkeit von einer Rate absorbierter Photonen für verschiedene Detektortypen.

Fig. 5 zeigt ein Entfernungsmessgerät zur optischen Entfernungsmessung gemäß einer Ausführungsform der vorliegenden Erfindung.

DETAILLIERTE BESCHREIBUNG VON AUSFÜHRUNGSFORMEN

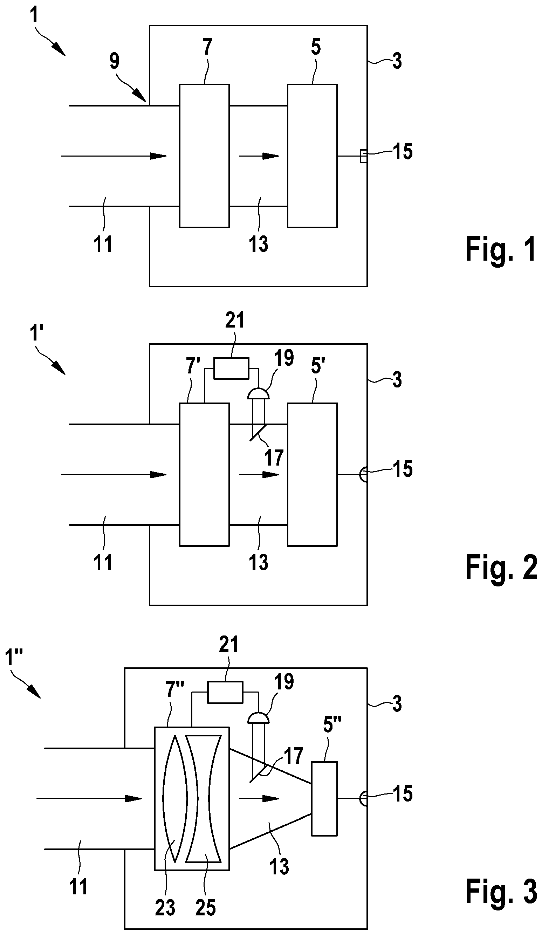

Fig. 1 zeigt einen Photonendetektor 1, bei dem innerhalb eines Gehäuses 3 ein paralysierbares Photonen-empfindliches Element 5 und ein Photonentransmissionselement 7 angeordnet sind. Ein von außen auftreffender Lichtstrahl 11 tritt durch ein Fenster 9 in das Gehäuse 3 ein und trifft zunächst auf das Photonentransmissionselement 7. Das Photonentransmissionselement 7 ist hierbei ein zumindest teilweise transparentes, optisches Bauteil aus einem photochromen Material, welches bei höherer Lichtintensität eine höhere Lichtabsorption aufweist. Ein Beispiel eines photochromen Materials könnte Phenanthropyran sein. Dadurch kann erreicht werden, dass ein durch das Photonentransmissionselement 7 transmittierter Lichtstrahl 13, der letztendlich auf dem paralysierbaren Photonen-empfindlichen Element 5 auftrifft, keine übermäßig hohe Photonenintensität aufweist, selbst dann, wenn der einfallende Lichtstrahl 11 eine sehr hohe Lichtintensität aufweisen sollte. Die von dem Photonen-empfindlichen Element 5 detektierten Ereignisse werden an einem Ausgang 15 ausgegeben.

In dem dargestellten Ausführungsbeispiel ist das paralysierbare Photonen-empfindliche Element mit Hilfe einer SPAD ausgebildet. Mit einer durch die PDP (Photon Detection Probability; Photonendetektionswahrscheinlichkeit) beschriebenen Wahrscheinlichkeit löst ein auf die SPAD auftreffendes Photon einen Lawinendurchbruch der Diode aus, der am Ausgang als Puls detektiert werden kann. Nach dem Durchbruch muss die SPAD wieder vorgespannt werden, um für ein weiteres Photon sensibel sein zu können, das heißt, einen weiteren Detektorpuls erzeugen zu können. Die Zeit, innerhalb derer die SPAD nicht erneut angeregt werden kann, wird als Totzeit $\tau$ bezeichnet. Erzeugt ein aufgrund des Aufladungsvorganges oder Erholungsvorganges der SPAD auftreffendes Photon einen weiteren Lawinendurchbruch, bevor die für eine Erzeugung eines Detektorpulses erforderliche Vorspannungsschwelle erreicht ist, kann sich die Totzeit verlängern. Der Detektor kann paralysiert werden. Die Zahl k der Photonen, die unter der Annahme einer Poissonverteilung während eines Zeitin-

tervalls $\Delta T$ von einem paralysierbaren Photonen-empfindlichen Element mit der Totzeit $\tau$ detektiert werden kann, kann beschrieben werden als

$$k=\Delta T \bullet N \bullet exp(-N \bullet \tau)$$

wobei N die absorbierte Photonenrate ist.

In Fig. 4 zeigt die Kurve 101 das Verhalten der Zählrate eines paralysierbaren Detektors in Abhängigkeit von der Rate absorbierter Photonen. Für einen paralysierbaren Detektor weist die Anzahl der detektierten Photonen ein Maximum auf, das bei der dargestellten Kurve 101 bei etwa 25 MHz liegt. Eine weitere Erhöhung der Rate absorbierter Photonen reduziert die Anzahl der detektierten Photonen. Bei Betrieb in diesem Regime, das heißt, dem Paralysierungsbereich, in dem aufgrund einer sehr hohen Photonenintensität zumindest eine teilweise Paralysierung des Photonen-empfindlichen Elementes eintritt, kann eine Reduzierung der Photonenintensität des auf das Photonen-empfindliche Element 5 auftreffenden transmittierten Lichtes 13 dazu führen, dass die Zahl der detektierbaren Photonen erhöht werden kann. Neben einer Maximierung der Zählereignisse kann eine durch das Photonentransmissionselement 7 bewirkte Reduzierung der auftreffenden Photonenintensität auch dazu benutzt werden, einen Dynamikbereich des Photonendetektors zu erhöhen. Es kann eine derart starke Reduzierung der Photonenintensität durch das Photonentransmissionselement 7 gewählt werden, dass das Photonen-empfindliche Element 5 stets unterhalb des Paralysierungsbereichs betrieben wird, so dass dieses zur Intensitätsmessung verwendet werden kann. Die Zählereignisdichte ist dabei nicht mehr zwingend proportional zur Lichtintensität des einfallenden Lichtstrahls 11, kann jedoch dennoch die Detektion kurzzeitiger Lichtintensitätsschwankungen ermöglichen, wie sie zum Beispiel bei einer Einstrahlung von in der Intensität zeitlich periodisch moduliertem Messlicht 11 bei Laserentfernungsmessgeräten auftreten kann.

Die Kurve 103 in Fig. 4 zeigt ein idealisiertes Verhalten eines Photonendetektors gemäß einer Ausführungsform der vorliegenden Erfindung. Bei niedrigen Raten absorbierter Photonen, etwa im Bereich unterhalb von 10 MHz, weist der Photonendetektor ein lineares Ansprechverhalten auf. Im Bereich von etwa 10 MHz bis etwa 25 MHz beginnt das Ansprechverhalten des Photonendetektors zu sättigen. Während ein herkömmliches paralysierbares Photonen-empfindliches Element jedoch bei noch höheren Raten absorbierter Photonen eine abnehmende Zählrate aufweist, wie dies in der Kurve 101 dargestellt ist, kann bei dem erfindungsgemäßen Photonendetektor mit Hilfe des variablen Photonentransmissionselementes erreicht werden, dass auch bei hohen Raten absorbierter Photonen stets nur so viele Photonen auf das Photonen-empfindliche Element treffen, dass dieses etwa im optimalen Arbeitspunkt betrieben wird. Mit anderen Worten kann das Photonentransmissionselement derart eingestellt werden, dass das transmittierte Licht eine Photonenrate von etwa 20 - 30 MHz im Mittel aufweist. Kurzzeitige Schwankungen der eingestrahlten Photonenintensität werden dabei vorzugsweise nicht von dem Photonentransmissionselement ausgeglichen, so dass solche kurzzeitigen Intensitätsschwankungen weiterhin von dem Photonen-empfindlichen Element detektiert werden können.

Lediglich zu Vergleichszwecken ist in Fig. 4 auch mit der Kurve 107 ein ideal lineares Ansprechverhalten und mit der Kurve 105 ein Ansprechverhalten eines mit einer Totzeit $\tau$ behafteten, nicht-paralysierbaren Photonen-empfindlichen Elementes wiedergegeben.

Fig. 2 zeigt eine alternative Ausführungsform eines Photonendetektors 1'. In dem transmittierten Strahl 13 ist ein kleiner Spiegel 17 angeordnet, der einen Teil des transmittierten Lichtes auf eine Photonenintensitätsmesseinrichtung 19 beispielsweise in Form einer herkömmlichen lichtempfindlichen Diode lenkt. Eine von der Diode gemessene Photonenintensität wird an eine Steuer- oder Regeleinrichtung 21 geleitet, die daraufhin das Photonentransmissionselement 7' hinsichtlich seiner transmittierten Photonenintensität aktiv steuert oder regelt. Das Photonentransmissionselement kann hierbei als teildurchlässiges, variables Flüssigkristall-Dämpfungselement ausgestaltet sein, bei dem je nach von der Steuerungseinrichtung 21 angelegtem Signal eine Lichttransmissionseigenschaft eingestellt werden kann.

Fig. 3 zeigt eine alternative Ausgestaltung eines Photonendetektors 1" gemäß einer weiteren Ausführungsform der vorliegenden Erfindung. In diesem Fall ist das Photonentransmissionselement 7" mit Hilfe zweier gegeneinander verschiebbarer Linsen 23, 25 dazu ausgelegt, einen transmittierten Lichtstrahl 13 mehr oder weniger stark zu fokussieren. Je nach Ansteuerung durch die Steuereinrichtung 21 wird somit das eingestrahlte Licht 11 durch das Photonentransmissionselement 7" auf eine mehr oder weniger große Teilfläche des Photonen-empfindlichen Elementes 5" fokussiert und somit die auftreffende Photonenintensität variiert.

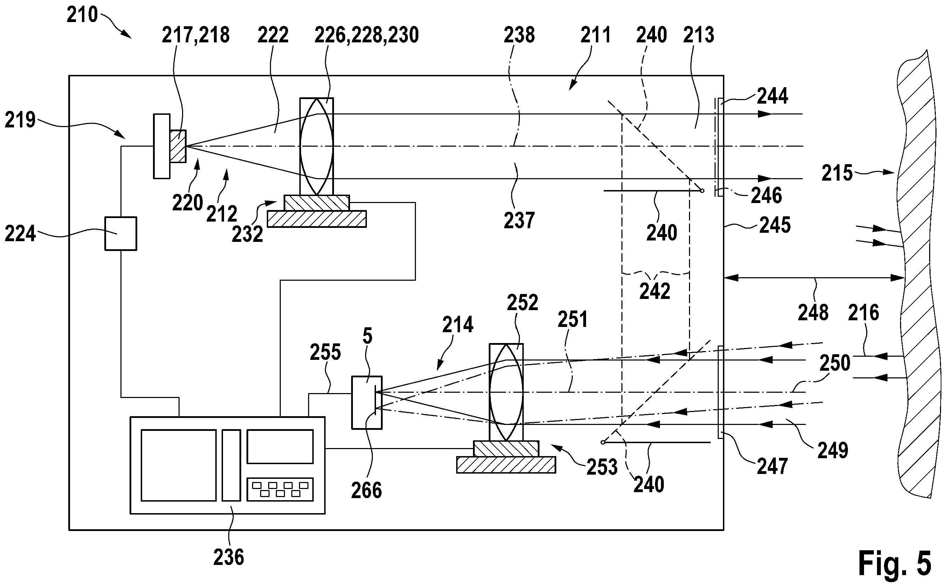

In Fig. 5 ist in schematischer Weise ein erfindungsgemäßes Entfernungsmessgerät 210 zur optischen Entfernungsmessung mit den wichtigsten Komponenten zur Beschreibung ihrer Funktion dargestellt.

Das Entfernungsmessgerät 210 weist ein Gehäuse 211 auf, in dem eine Photonenquelle 212 zur Aussendung optischer Messstrahlung 213 sowie ein Photonendetektor 214 zur Detektion von von einem Zielobjekt 215 zurücklaufender Messstrahlung 216 angeordnet sind.

Die Photonenquelle 212 beinhaltet eine Lichtquelle, die im dargestellten Ausführungsbeispiel durch eine Halbleiter-Laserdiode 218 realisiert ist. Die Laserdiode 218 sendet einen Laserstrahl 220 in Form eines für das menschliche Auge sichtbaren Lichtbündels 222 aus. Die Laserdiode 218 wird dazu über ein Steuergerät 224 betrieben, das durch eine entsprechende Elektronik eine zeitliche Modulation eines elektrischen Eingangssignals 219 der Laserdiode 218 erzeugt. Durch eine derartige Modulation des Diodenstromes lässt sich erreichen, dass die optische Messstrahlung 213, welche zur Entfernungsmessung genutzt wird, ebenfalls in gewünschter Weise zeitlich in ihrer Intensität moduliert wird.

Das Laserstrahlbündel 220 durchläuft anschließend eine Kollimationsoptik 226 in Form eines Objektivs 228, das in Fig. 5 in vereinfachter Weise in Form einer einzelnen Linse dargestellt ist. Das Objektiv 228 befindet sich in diesem Ausführungsbeispiel optional auf einer Verstellmimik 232, die prinzipiell eine Änderung der Position des Objektivs in allen drei Raumrichtungen, beispielsweise zu Justagezwecken, ermöglicht. Alternativ kann die Kollimationsoptik 226 jedoch auch bereits Bestandteil der Laserdiode 218 sein bzw. fest mit dieser verbunden sein.

Nach Durchlaufen des Objektivs 228 ergibt sich ein beispielsweise Amplitudenmoduliertes Signal der Messstrahlung 213 in Form eines nahezu parallelen Lichtbündels 237, das sich entlang einer optischen Achse 238 der Photonenquelle 212 ausbreitet.

In der Photonenquelle 212 kann sich zudem noch eine vorzugsweise schaltbare Strahlumlenkung 240 befinden, die es gestattet, die Messstrahlung 213 ganz oder teilweise unter Umgehung des Zielobjektes 215 direkt, das heißt geräteintern, auf die Empfangseinrichtung 214 umzulenken. Auf diese Weise kann eine geräteinterne Referenzstrecke 242 erzeugt werden, die eine Kalibrierung bzw. einen Abgleich des Entfernungsmessgeräts gestattet.

Wird mit dem Entfernungsmessgerät 210 eine Entfernungsmessung durchgeführt, verlässt die Messstrahlung 213 das Gehäuse 211 des Entfernungsmessgeräts durch ein optisches Fenster 244 in der Stirnwand 245 der Messvorrichtung 210. Die Öffnung des optischen Fensters 244 kann beispielsweise durch einen Shutter 246 gesichert sein. Zur eigentlichen Messung wird das Entfernungsmessgerät 210 dann auf ein Zielobjekt 215 hin ausgerichtet, dessen Entfernung 248 zum Entfernungsmessgerät 210 ermittelt werden soll. Das an dem gewünschten Zielobjekt 215 reflektierte oder gestreute Signal 216 bildet zurücklaufende optische Messstrahlung 216 in Form eines zurücklaufenden Strahlenbündels 249 bzw. 250, das zu einem gewissen Teil wieder in das Entfernungsmessgerät 210 zurückgelangt.

Durch ein Eintrittsfenster 247 an der Stirnseite 245 des Entfernungsmessgeräts 10 wird die zurücklaufende Messstrahlung 216 in das Entfernungsmessgerät 210 eingekoppelt und trifft dann, wie in Fig. 5 dargestellt, auf eine Empfangsoptik 252.

In Fig. 5 sind exemplarisch zur Verdeutlichung zwei zurücklaufende Messstrahlenbündel 249 bzw. 250 für zwei unterschiedliche Zielobjektentfernungen 248 eingezeichnet. Für große Objektentfernungen, wobei groß als groß gegenüber der Brennweite der Empfangsoptik 252 interpretiert werden kann, fällt die vom Zielobjekt 215 zurücklaufende optische Messstrahlung 216 annähernd parallel zur optischen Achse 251 des Photonendetektors 214 ein. Dieser Fall ist im Ausführungsbeispiel der Fig. 5 durch das Messstrahlbündel 249 repräsentiert. Mit kleiner werdender Objektentfernung wird die in das Entfernungsmessgerät einfallende zurücklaufende Messstrahlung 216 aufgrund einer Parallaxe immer mehr gegenüber der optischen Achse 251 des Photonendetektors 14 geneigt. Als Beispiel für ein solches rücklaufendes Messstrahlenbündel im Nahbereich des Entfernungsmessgeräts ist in Fig. 5 das Strahlenbündel 250 eingezeichnet.

Die Empfangsoptik 252, die in Fig. 5 ebenfalls nur schematisch durch eine einzelne Linse symbolisiert ist, fokussiert das Strahlenbündel der zurücklaufende Messstrahlung 216 auf eine Detektionsfläche 66 eines in dem Photonendetektor 214 vorgesehenen Photonenempfindlichen Elementes 5. Die Empfangsoptik 252 ist hierbei mit einem photochromen Material ausgebildet, dass sich je nach auftreffender Lichtintensität unterschiedlich stark eintönt, sodass die Empfangsoptik 252 gleichzeitig auch die Aufgabe des Photonentransmissionselementes 7 ausüben kann.

Das Photonen-empfindliche Element 5 weist zur Detektion der optischen Messstrahlung mindestens eine lichtempfindliche SPAD auf. Durch die in der Detektionsfläche 266 vorgesehene(n) SPAD(s), die einzeln oder in Gruppen zusammengefasst in Pixeln Matrix-artig angeordnet sein können und mit einer Auswerteeinrichtung 236 verbunden sind, wird die einfallende zurücklaufende Messstrahlung 216 in ein elektrisches Signal 255 umgewandelt und der weiteren Auswertung in der Auswerteeinrichtung 236 zugeführt. Das elektrische Signal 255 kann dabei aufgrund inhärenter Eigenschaften der SPADs als digitales Signal angesehen werden, das eine Pulsfolge von auf die jeweiligen Pixel der Detektionsfläche 266 auftreffender Photonen wiedergibt.

Die von einer einzelnen SPAD oder einer Kombination von SPADs generierten Detektionssignale können einer oder mehreren in einer Auswerteeinrichtung 236 enthaltenen Entfernungsbestimmungseinrichtung(en) zugeführt werden. Die Entfernungsbestimmungseinrichtung kann die Detektionssignale aufsummieren und daraus ein Signal erzeugen, das einer zeitabhängigen Intensität des auf die jeweiligen SPADs auftreffenden Lichtsignals bzw. der Lichtintensität entspricht. Indem dieses Signal in Relation zu einem Anregungssignal gesetzt wird, das den zeitlichen Verlauf der von der Photonenquelle emittierten Photonenrate angibt, kann auf eine Photonenflugzeit von der Photonenquelle hin zu dem Zielobjekt und wieder zurück zu dem Photonendetektor geschlossen werden. Falls die Photonenquelle das ausgesendete Licht beispielsweise sinusartig periodisch moduliert, kann eine Flugzeit aus einem Phasenunterschied zwischen der ausgesendeten und der detektierten Messstrahlung ermittelt werden. Aus der ermittelten Flugzeit kann letztendlich auf die Entfernung zu dem Zielobjekt geschlossen werden.

## Patentansprüche

1. Entfernungsmessgerät (210) zum Messen einer Entfernung zu einem Zielobjekt (215), aufweisend:

   eine Photonenquelle (212) zum Aussenden von Photonen zu dem Zielobjekt (215);
   einen Photonendetektor (1), zum Detektieren von von dem Zielobjekt (215) zurücklaufenden Photonen,
   eine Auswerteeinrichtung (236) zum Bestimmen der Entfernung zu dem Zielobjekt aufgrund einer Laufzeit von Photonen,
   wobei der Photonendetektor (1) ein paralysierbares Photonen-empfindliches Element mit wenigstens einer SPAD (5), und ein Photonentransmissionselement (7) aufweist,
   **dadurch gekennzeichnet, dass**
   das Photonentransmissionselement (7) als variables Flüssigkristall-Dämpfungsglied ausgebildet ist; und
   der Photonendetektor (1) ferner eine Photonenintensitätsmesseinrichtung (19) und eine Steuereinrichtung (21) aufweist,
   wobei die Photonenintensitätsmesseinrichtung (19) als Lichtsensor ausgebildet ist, welcher dazu ausgelegt ist, eine auf den Lichtsensor treffende Lichtintensität zu messen und ein entsprechendes Messsignal an die Steuereinrichtung (21) weiterzuleiten; und
   wobei die Steuereinrichtung (21) dazu ausgelegt ist, das als variables Flüssigkristall-Dämpfungsglied ausgebildete Photonentransmissionselement (7) entsprechend dem Messsignal anzusteuern und aktiv die transmittierte Photonenintensität in Abhängigkeit von der von der Photonenintensitätsmesseinrichtung (19) gemessenen Photonenintensität zu variieren.

## Claims

1. Distance measuring device (210) for measuring a distance from a target object (215), comprising:

   a photon source (212) for emitting photons to the target object (215);
   a photon detector (1), for detecting photons returning from the target object (215),
   an evaluation unit (236) for determining the distance from the target object on the basis of a propagation time of photons,
   wherein the photon detector (1) comprises a paralyzable photon-sensitive element having at least one SPAD (5), and a photo transmission element (7),
   **characterized in that**
   the photon transmission element (7) is configured as a variable liquid-crystal attenuator; and
   the photon detector (1) furthermore comprises a photon intensity measuring unit (19) and a control unit (21),
   wherein the photon intensity measuring unit (19) is configured as a light sensor designed to measure a light intensity impinging on the light sensor and to forward a corresponding measurement signal to the control unit (21); and
   wherein the control unit (21) is designed to drive the photon transmission element (7) configured as a variable liquid-crystal attenuator in accordance with the measurement signal and actively to vary the transmitted photon intensity in a manner dependent on the photon intensity measured by the photon intensity measuring unit (19).

## Revendications

1. Appareil de mesure de distance (210) destiné à mesurer une distance par rapport à un objet cible (215), comportant :

   une source de photons (212) destinée à émettre des photons vers l'objet cible (215) ;
   un détecteur de photons (1) destiné à détecter des photons revenant de l'objet cible (215),
   un moyen d'évaluation (236) destiné à déterminer la distance par rapport à l'objet cible sur la base d'un temps de propagation de photons,
   dans lequel le détecteur de photons (1) comprend un élément sensible aux photons paralysable ayant au moins un SPAD (5), et un élément de transmission de photons (7),
   **caractérisé en ce que**
   l'élément de transmission de photons (7) est réalisé sous la forme d'un élément atténuateur variable à cristaux liquides ; et
   le détecteur de photons (1) comprend en outre un moyen de mesure d'intensité de photons (19) et un moyen de commande (21),
   dans lequel le moyen de mesure d'intensité de photons (19) est réalisé sous la forme d'un capteur de lumière qui est conçu pour mesurer une intensité lumineuse incidente sur le capteur de lumière et pour transmettre un signal de mesure correspondant au moyen de commande (21) ; et
   dans lequel le moyen de commande (21) est conçu pour commander l'élément de transmission de photons (7) réalisé sous la forme d'un atténuateur variable à cristaux liquides en fonction du signal de mesure et pour faire varier activement l'intensité de photons transmise en fonction de l'intensité de photons mesurée par le moyen de mesure d'intensité de photons (19).

**Fig. 1**

**Fig. 2**

**Fig. 3**

Fig. 4

Fig. 5

EP 2 476 013 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005084397 A2
- WO 2006083349 A2
- US 20070086076 A1
- US 4973125 A